# FASCICULE DE BREVET EUROPEEN

(11) **EP 3 541 656 B1**
(45) Date de publication et mention de la délivrance du brevet: **28.12.2022**
(21) Numéro de dépôt: 17804257.8
(22) Date de dépôt: 17.11.2017
(51) Int. Cl.: B60N 2/07, B60N 2/42, B60N 2/015, B60N 2/68

(54) **DISPOSITIF DE RENFORT AMOVIBLE DE LA GLISSIERE D'UN SIEGE D'UN VEHICULE SUR UN SUPPORT**
ABNEHMBARE VERSTÄRKUNGSVORRICHTUNG FÜR DIE FÜHRUNGSSCHIENE EINES FAHRZEUGSITZES AN EINEM TRÄGER
REMOVABLE REINFORCEMENT DEVICE FOR THE GUIDE RAIL OF A VEHICLE SEAT ON A SUPPORT

(30) Priorité: 21.11.2016 FR 1661286
(43) Date de publication de la demande: 25.09.2019
(73) Titulaire: PSA Automobiles SA, 78300 Poissy (FR)
(72) Inventeur: CARRIER, Sebastien, 78310 Maurepas (FR); PINTO TEIXEIRA, Frederic, 91160 Ballainvilliers (FR); DORIDOT, Jean Marie, 94230 Cachan (FR)
(86) Numéro de dépôt international: PCT/FR2017/053153
(87) Numéro de publication internationale: WO 2018/091845

(56) Documents cités:
- EP-A1- 2 599 657
- CN-B- 104 057 844
- FR-A1- 2 980 157
- JP-A- 2013 193 718
- US-A- 5 967 604

## Description

L'invention a trait au domaine des sièges de véhicules sur glissière, et plus particulièrement à la fixation d'une glissière de siège sur un plancher de véhicule.

Un siège de véhicule est généralement constitué d'un dossier, en liaison avec une assise destinée à recevoir un ou plusieurs passagers. Afin d'augmenter l'habitabilité de l'habitacle, le siège est souvent monté sur glissière, ce qui permet de mouvoir le siège selon une direction longitudinale.

Contrairement à un siège fixe, qui présente une structure directement solidaire avec le plancher, un siège sur glissière ne peut être lié au plancher que par l'intermédiaire de la glissière. Ainsi, le siège est rattaché sur une partie mobile de la glissière, qui coulisse sur une partie fixe, rattachée au plancher du véhicule. La partie fixe est en général fixée au plancher, par l'intermédiaire de deux vis de fixation, en insertion dans des trous taraudés, prévus au droit de la glissière.

Un tel type de fixation n'est néanmoins pas adapté pour des sièges ou des banquettes destinés à accueillir au moins deux personnes. En effet, pour une banquette présentant une taille et une masse supérieure à celle d'un siège destiné à recevoir une seule personne, l'effort exercé par cette banquette sur le plancher du véhicule, est sensiblement plus élevé que l'effort exercé par un siège à une seule personne sur le plancher. Une telle situation peut s'avérer problématique en situation de choc. En effet, lors d'un choc frontal, la banquette subit un effort de traction, qui engendre au niveau des fixations de la glissière une concentration d'effort sur le plancher, autour des vis de fixation. Si le siège possède une masse importante, cette concentration d'effort peut aboutir, dans des cas extrêmes, à un arrachement du plancher, conduisant au détachement du siège du plancher du véhicule.

Pour éviter une telle situation, il est généralement prévu de renforcer la fixation de la glissière sur le plancher du véhicule, par l'intermédiaire de pattes de fixation, rapportées sous la glissière. Les pattes de fixation dépassent de la glissière. Les pattes de fixation, destinées à être solidarisées avec le plancher, sont fixées à la glissière par rivetage ou soudage, afin de résister aux contraintes locales élevées liées au choc. De cette manière, l'effort est réparti sur deux points, ce qui permet de renforcer la fixation du siège sur le plancher.

De telles pattes de fixation présentent néanmoins l'inconvénient d'être lourdes, ce qui augmente le poids total du siège, et le rend difficile à manipuler par des opérateurs. De plus, la patte de fixation dépassant de la glissière, et par extension du siège, est associée à un encombrement important, ce qui a pour effet, d'une part, de rendre complexe la manutention du siège sur un convoyeur mécanique, et, d'autre part, d'empêcher un stockage optimal du siège en entrepôt.

Afin de remédier aux inconvénients précités, le document FR 3 006 253 divulgue un dispositif de fixation amovible d'une glissière de siège sur un plancher de véhicule, la glissière étant attachée au plancher par un dispositif de fixation qui comprend notamment une embase, un pion de centrage et un boulon. Le pion de centrage, permet la mise en position de l'embase sur la glissière, et est destiné à se rompre en cas de choc, ce qui permet de limiter les efforts en cas de choc dans la zone de centrage. Néanmoins, pour le cas d'un siège lourd, comme par exemple une banquette, un tel dispositif ne résout pas le problème de concentration de contraintes sur le plancher. En effet, la rupture du pion de centrage, conduit à n'avoir qu'un seul point de rattachement de la glissière sur le plancher par le boulon, cet unique point de rattachement pouvant être insuffisant pour retenir une banquette sur le plancher en cas de choc.

Le document US5967604 décrit un véhicule comprenant un dispositif de renfort agencé entre une glissière d'un siège et un plancher dudit véhicule, le dispositif de renfort comprenant une entretoise avec une partie proximale disposée entre la glissière et le plancher, et une partie distale fixée au plancher, un pion de centrage traversant ladite partie proximale depuis la glissière jusqu'à un orifice dans le plancher.

Un premier objectif est de proposer un dispositif de renfort permettant de déporter les efforts de fixation de la glissière sur le plancher, et ainsi de renforcer la fixation d'une glissière sur un plancher de véhicule.

Un deuxième objectif est de proposer un dispositif de renfort apte à résister aux chocs.

Un troisième objectif est de proposer un siège muni d'une glissière répondant aux objectifs précités.

Un quatrième objectif est de proposer un véhicule muni d'un dispositif de renfort tel que présenté ci-dessus.

À cet effet, il est proposé, en premier lieu, un dispositif de renfort agencé entre une glissière d'un siège et un plancher de véhicule, le dispositif de renfort comprenant une entretoise incluant une partie proximale, destinée à être fixée entre la glissière et le plancher, et une partie distale, en prolongement de la partie proximale, la partie distale s'étendant au-delà de la glissière, la partie distale étant destinée à être fixée sur le plancher, la glissière étant destinée à être fixée sur le plancher du véhicule, et en ce qu'une cale de fixation, fait saillie de la glissière, la partie proximale du dispositif de renfort comprenant un trou destiné à recevoir ladite cale de fixation.

Un tel dispositif de renfort permet de répartir les efforts exercés par le siège sur le plancher du véhicule, ce qui permet de renforcer la fixation du siège sur le plancher.

Diverses caractéristiques supplémentaires peuvent être prévues, seules ou en combinaison :
- la partie distale est destinée à former une liaison encastrement avec le plancher ;
- le dispositif de renfort comprend une ouverture distale, disposée sur la partie distale, et une vis de fixation, l'ouverture distale étant apte à permettre le passage de la vis de fixation ;
- le dispositif de renfort comprend un pion de centrage, le pion de centrage étant apte à être inséré dans un orifice agencé dans le plancher du véhicule ;
- le dispositif de renfort comprend plusieurs parties distales ;
- le dispositif de renfort comprend une ouverture proximale, disposée sur la partie proximale, et une vis d'assemblage, la vis d'assemblage s'insérant au sein de l'ouverture proximale ;
- le dispositif de renfort comprend un évidement, disposé autour de l'ouverture proximale, l'évidement formant une zone déformable sur l'entretoise.

D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 est une vue en perspective d'un véhicule, le véhicule comprend un siège muni d'une glissière et d'un dispositif de renfort ;

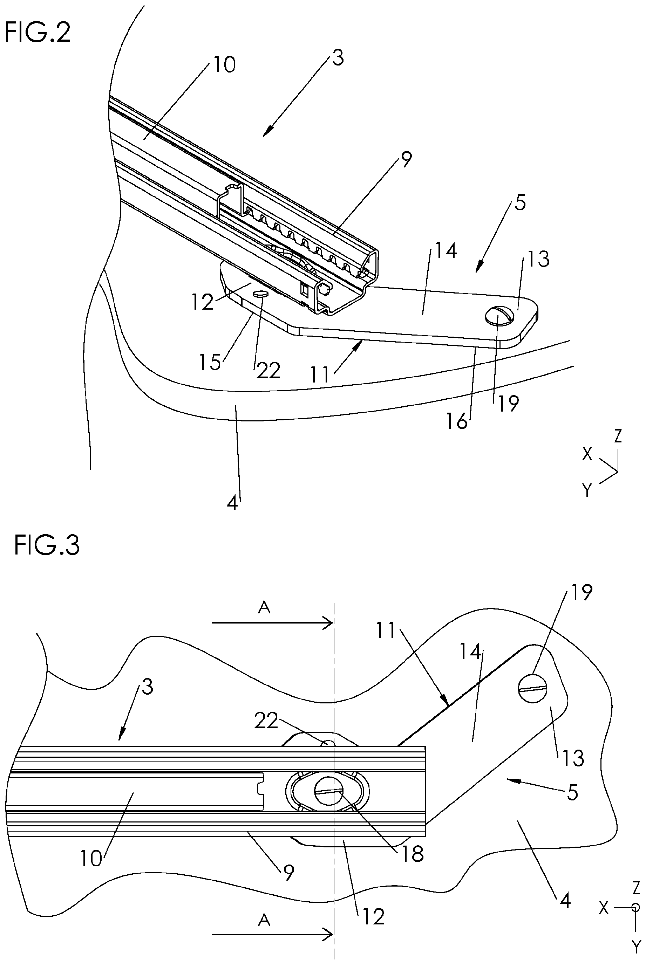

- la figure 2 est une vue en perspective du dispositif de renfort, monté entre une glissière de siège et un plancher ;
- la figure 3 est une vue de dessus du dispositif de renfort, monté entre une glissière de siège et un plancher ;
- la figure 4 est une vue en coupe du dispositif de renfort, monté entre une glissière de siège et un plancher ;
- la figure 5 est une vue en perspective éclatée du dispositif de renfort, monté entre une glissière de siège et un plancher ;
- la figure 6 est une vue en coupe du dispositif de renfort monté entre une glissière de siège et un plancher, le dispositif de renfort étant représenté selon une variante de réalisation ;
- la figure 7 est une vue en perspective éclatée du dispositif de renfort, monté entre une glissière de siège et un plancher, le dispositif de renfort étant représenté selon une variante de réalisation.

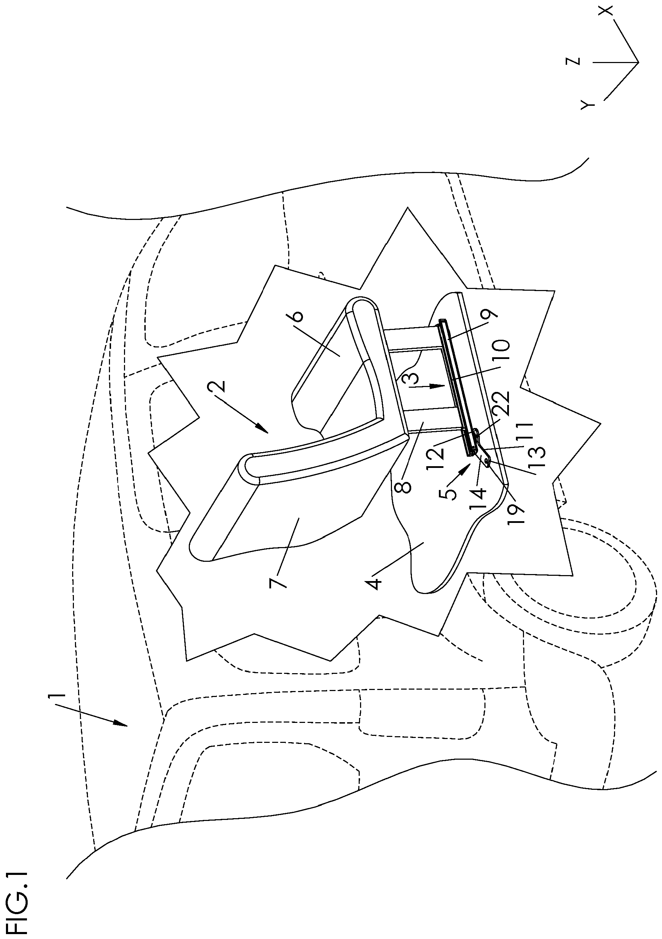

Sur la figure 1 est représenté un véhicule **1** comprenant un siège **2** pourvu d'une glissière **3,** la glissière **3** étant fixée au plancher **4** du véhicule **1,** par l'intermédiaire d'un dispositif **5** de renfort.

Le siège **2,** représenté partiellement sur la figure 1, est une banquette, apte à accueillir plusieurs occupants, comme par exemple une banquette arrière d'un véhicule **1** automobile.

Selon d'autres modes de réalisation, non représenté, le siège **2** est destiné à recevoir une unique personne, comme l'est par exemple un siège avant d'un véhicule **1** automobile.

De manière non limitative, le véhicule **1** représenté est un véhicule **1** automobile, mais d'autres types de véhicules peuvent être envisagés, par exemple un véhicule maritime, ferroviaire ou aérien.

On définit par rapport au véhicule **1** un repère orthogonal XYZ comprenant trois axes perpendiculaires deux à deux, à savoir :
- un axe X, définissant une direction longitudinale, horizontale, confondue avec la direction générale de déplacement du véhicule **1,**
- un axe Y, définissant une direction transversale, horizontale, qui avec l'axe X définit un plan XY horizontal,
- un axe Z, définissant une direction verticale, perpendiculaire au plan XY horizontal.

Dans la suite de la description, et en relation au repère défini ci-dessus, les termes "longitudinal" ou "longitudinalement" font référence à une direction confondue avec l'axe X, les termes "transversal" ou "transversalement" font référence à une direction confondue avec l'axe Y, et les termes "vertical" ou "verticalement" font référence à une direction confondue avec l'axe Z. Les termes de position absolue, tels que "avant", "arrière", "haut", "bas", "gauche", "droite", ou relatifs comme "dessus", "supérieur", "dessous", "inférieur" sont définis par rapport au sens de progression normale du véhicule **1,** dite "marche avant".

Comme représenté sur les figures, le véhicule **1** comprend un plancher **4,** disposé, de manière non limitative, horizontalement.

Selon le mode de réalisation représenté sur la figure 1, le siège **2** comprend une assise **6** et un dossier **7.** Le siège **2** est fixé à une glissière **3,** par exemple par l'intermédiaire d'une pluralité de pieds **8.**

Tel qu'illustré sur l'ensemble des figures, la glissière **3** comprend une partie **9** fixe, et une partie **10** mobile, la partie **10** mobile étant solidaire des pieds **8** du siège **2,** et la partie **9** fixe étant fixée à un support, par exemple le plancher **4** du véhicule **1.**

Selon d'autres modes de réalisation, non représentés, la partie 9 fixe est liée solidairement à des pièces en interface avec le plancher **4.**

La partie **10** mobile est montée coulissante par rapport à la partie **9** fixe, ce qui permet de déplacer le siège **2,** par exemple selon une direction longitudinale, vers l'avant ou l'arrière du véhicule **1.**

Le dispositif **5** de renfort comprend une entretoise **11,** intercalée entre le plancher **4** et la glissière **3,** afin de permettre une bonne transmission des efforts entre la glissière **3** et le plancher **4.**

Comme représenté sur l'ensemble des figures, l'entretoise **11** comprend une partie **12** proximale, une partie **13** distale, la partie **13** distale étant disposée au bout d'un prolongement **14,** la partie **13** distale s'étendant au-delà de la glissière **3.**

Avantageusement, la partie **12** proximale et la partie **13** distale sont respectivement munies d'une surface **15** proximale, et d'une surface **16** distale, destinées à entrer en contact avec le plancher **4** du véhicule **1.** Aussi, l'entretoise **11** comprend deux surfaces de contact avec le plancher **4.** De cette façon, les efforts subis par l'entretoise **11** sont répartis sur ces deux aires de contact.

Selon d'autres modes de réalisation non représentés, l'entretoise **11** comprend une pluralité de parties **13** distales, chacune d'entre elles étant en contact respectivement avec le plancher **4** par leur surface **15** proximale. Une telle caractéristique permet d'accroître la surface de contact entre l'entretoise **11** et le plancher **4.**

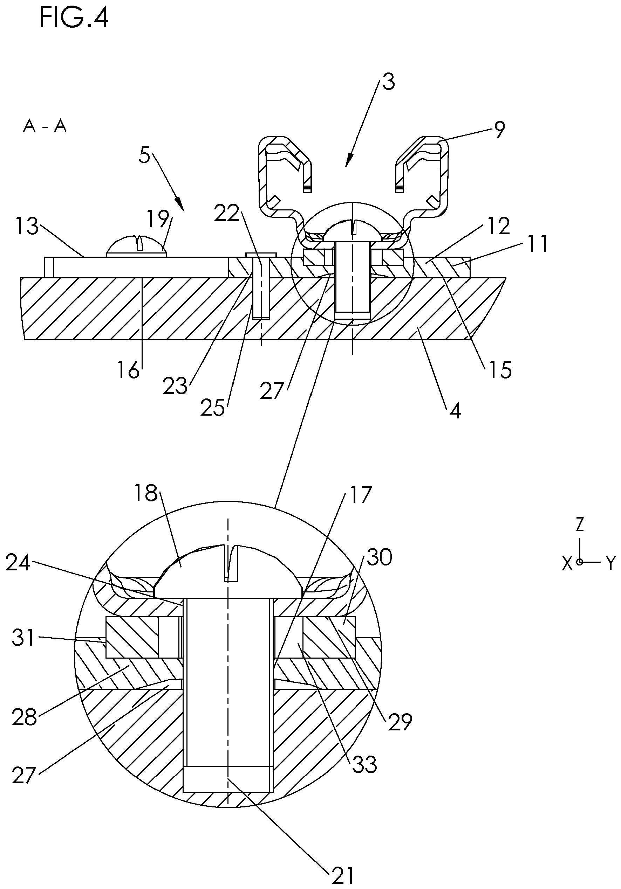

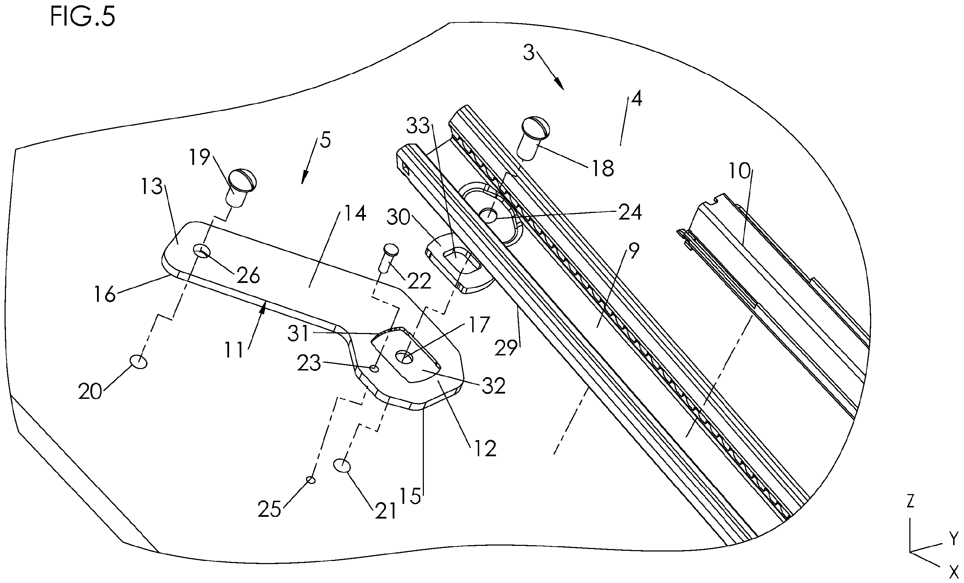

Selon le mode de réalisation représenté, la partie **12** proximale est destinée à être fixée entre la glissière **3** et le plancher **4** du véhicule **1.** Comme illustré sur les figures 4 et 5, la partie **12** proximale est fixée entre la partie **9** fixe de la glissière **3,** et le plancher **4.** De cette manière, la partie **12** proximale est apte à reprendre les efforts du siège **2** et de la glissière **3,** lorsqu'une contrainte, par exemple une contrainte de compression, est appliquée en direction du plancher **4.** Autrement dit, la partie **12** proximale est fixée au plancher **4** du véhicule **1,** par l'intermédiaire de la pression exercée par la partie **9** fixe de la glissière **3.**

Selon le mode de réalisation représenté, le dispositif **5** de renfort comprend au sein de la partie **12** proximale, une ouverture **17** proximale et un moyen d'assemblage, comme une vis **18** d'assemblage. La vis **18** d'assemblage et la partie **12** proximale sont toutes deux avantageusement coaxiales avec une cavité **24,** disposée sur la partie **9** fixe de la glissière **3,** et un trou **21** fileté, agencé sur le plancher **4** du véhicule **1.** De cette manière, la vis **18** d'assemblage est apte à traverser à la fois la cavité **24,** et l'ouverture **17** proximale, afin de s'insérer au sein du plancher **4,** ce qui offre l'avantage de permettre un montage simple du dispositif **5** de renfort au sein du véhicule **1,** comme illustré sur la figure 5.

Selon le mode de réalisation représenté, la partie **12** proximale est en contact avec la glissière **3,** par l'intermédiaire de la surface opposée à la surface **15** proximale.

Selon d'autres modes de réalisation, non représentés, la partie **12** proximale n'est pas directement en contact avec la glissière **3,** mais avec des pièces d'interface disposées entre la partie **12** proximale et la glissière **3,** comme par exemple une rondelle d'appui.

Comme représenté sur l'ensemble des figures, le dispositif **5** de renfort comprend un pion **22** de centrage, destiné à être inséré au sein d'un orifice **25** agencé dans le plancher **4** du véhicule **1.** Un tel pion **22** de centrage permet d'arrêter la rotation du dispositif **5** de renfort, et agit comme détrompeur afin d'éviter les erreurs d'assemblage, lors du montage du dispositif **5** de renfort sur le plancher **4.**

Comme représenté sur les figures 4 et 5, le pion **22** de centrage **22** est inséré dans l'entretoise **11,** par l'intermédiaire d'une ouverture **23** de centrage.

Selon d'autres modes de réalisation, non représentés, le pion **22** de centrage est venu de matière de l'entretoise **11.**

Grâce aux effets conjugués du pion **22** de centrage, du contact plan sur plan des surfaces **15, 16** de l'entretoise **11** sur le plancher **4,** de l'effort de compression de la vis **18** d'assemblage, l'entretoise **11** est fixée sur le plancher **4.**

Selon le mode de réalisation représenté, la partie **13** distale comprend une ouverture **26** distale, apte à permettre le passage d'un moyen de fixation, par exemple une vis **19** de fixation destinée à être en insertion dans un alésage **20** taraudé prévu dans le plancher **4.** De cette façon, l'entretoise est maintenue en position, et fixée au plancher **4.** Le mouvement de la partie **26** distale est arrêté verticalement et horizontalement.

Avantageusement, la partie **13** distale est solidairement rattachée au plancher **4** du véhicule **1,** par exemple en rendant le plancher **4** et la surface **16** distale contraints entre eux en compression. Par ce biais, la partie **16** distale est bloquée en rotation.

Selon d'autres modes de réalisation, non représentés, le moyen de fixation est une tige filetée, un goujon, ou tout autre type d'assemblage boulonné.

De préférence, la partie **13** et le plancher **4** sont en liaison encastrement, par exemple grâce à la contrainte de compression entre la partie **13** distale et le moyen de fixation. Autrement dit le plancher **4** et la partie **13** distale ne présentent sensiblement entre eux aucun degré de liberté de mouvement.

De cette manière, le plancher **4** et la partie **13** distale restent en contact l'un de l'autre, y compris lorsqu'un effort, par exemple une force de séparation conséquente à un choc du véhicule **1** sur un obstacle, tend à les séparer l'un de l'autre. Une telle caractéristique permet de renforcer la fixation de la glissière 3 sur le plancher **4,** car l'entretoise **11** comprend une fixation additionnelle sur le plancher **4,** en sus de la fixation localisée au sein de la partie **12** proximale. L'effort d'arrachement exercée par le siège **2** et la glissière **3** sur le plancher **4** est ainsi réparti sur deux localisations. Aussi, le plancher **4** subissant des efforts locaux diminués, les risques d'arrachement des points de fixation de la glissière **3** sont minimisés.

Selon le mode de réalisation représenté, le dispositif 5 de renfort présente une forme allongée et définit une courbure. Une telle entretoise **11** en élongation, outre son encombrement réduit, permet de disposer la partie **13** distale sur des trous préexistant situés au delà du voisinage de l'alésage, ce qui évite de devoir effectuer des perçages supplémentaires sur le plancher **4** du véhicule **1.**

Comme représenté sur la figure 4, le dispositif **5** de renfort comprend avantageusement un évidement **27** autour de l'ouverture **17** proximale, l'évidement **27** étant en retrait par rapport à la surface **15** proximale. Ainsi, au moment du montage de la glissière **3** sur l'entretoise **11,** la pression exercée par le moyen de fixation entraîne une poussée de la partie **9** fixe de la glissière **3** sur l'entretoise **11,** ce qui occasionne une déformation de l'évidement **27** de l'entretoise **11.** En d'autres termes, l'entretoise **11** présente une zone **28** déformable accrue au voisinage de l'évidement **27,** causée par l'amincissement de matière de l'entretoise localisée au droit de l'évidement **27.**

Selon le mode de réalisation représenté, le véhicule **1** comprend un siège **2** muni d'un dispositif **5** de renfort tel que précédemment décrit. Comme représenté sur la figure 5, la partie **9** fixe est, par exemple munie sur sa face **29** inférieure d'une cale **30** de fixation, la cale **30** présente une lumière **33,** destinée au passage de la vis **18** d'assemblage. En général, la glissière **3** est ancrée au véhicule **1** par deux cales **30** de fixation.

Selon d'autres modes de réalisation, non représentés, les cales **30** sont venues de matière de la partie **9** fixe.

Comme représenté sur la figure 5, la partie **12** proximale comprend sur la surface opposée à la surface **15** proximale un trou **32,** présentant un contour **31.** Le trou **32** présente avantageusement une section transversale ayant une forme complémentaire à la section transversale de la cale **30** de fixation de la glissière **3.** Autrement dit, la forme de l'ouverture est identique à la forme du contour **31.** Le trou **32** est ainsi destiné à permettre de recevoir la cale **30** de fixation. De cette façon, la mise en position de la glissière **3** sur l'entretoise **11** est guidée par le trou **32,** ce qui facilite le montage de la glissière **3** sur le dispositif **5** de renfort.

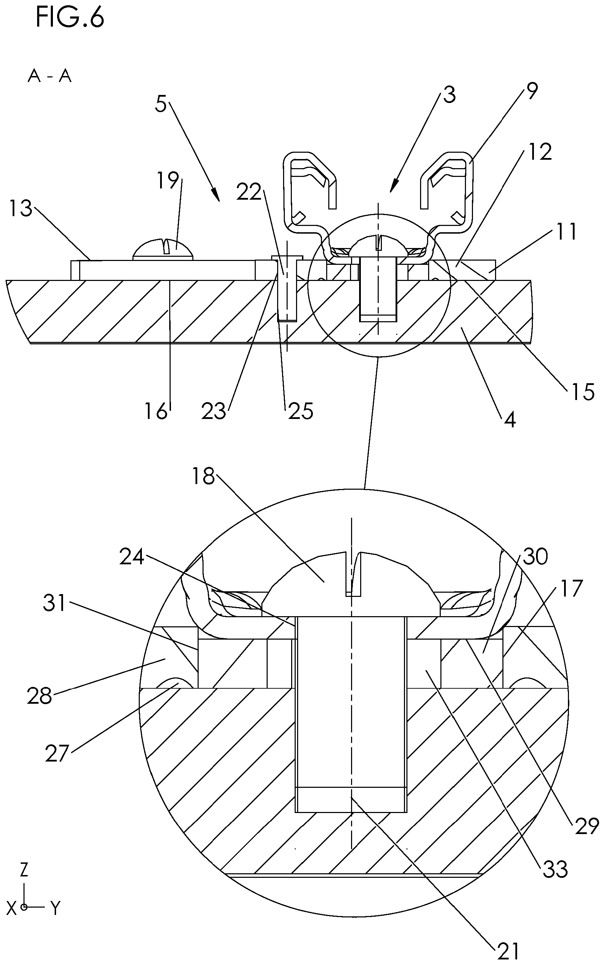

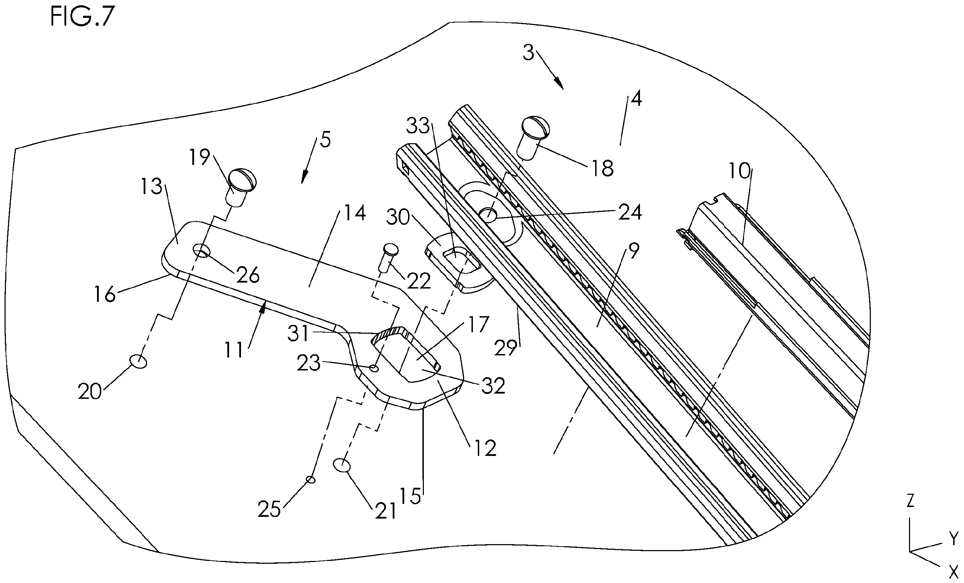

Selon une variante du mode de réalisation, représentée figure 6 et figure 7, le trou **32** est débouchant, autrement dit la cale **30** est directement en contact avec le plancher du véhicule **1.** La reprise d'effort a lieu sur les bords du trou **32,** plus précisément au voisinage du contour **31,** le trou **32** est alors confondu avec l'ouverture **17** proximale. La reprise d'effort a lieu autour du trou **32,** au voisinage du contour. Comme représenté figure 6, la zone à déformabilité accrue **28** est préférentiellement localisée autour du trou **32,** et est par exemple formée par un évidement **27** réalisé au voisinage du bord du trou **32.**

Le dispositif **5** de renfort tel que décrit ci-dessus présente l'avantage d'être escamotable de la structure du siège 2, et de la structure de la glissière 3.

Le dispositif 5 de renfort offre des facilités de montage. L'opération de montage du dispositif 5 de renfort sur le plancher 4 peut, en effet, être réalisée séparément de l'opération de montage du siège 2 et de la glissière 3 sur le plancher 4 du véhicule 1. La simplicité de montage permet d'améliorer l'ergonomie des mouvements du monteur en usine.

Etant indépendant du siège **2,** le dispositif **5** de renfort offre également l'avantage de ne pas alourdir le siège **2,** notamment dans le cas de banquettes arrière coulissantes.

Le dispositif **5** de renfort ne compromet pas non plus l'encombrement du siège **2,** ce qui permet d'optimiser l'emballage du siège **2** et son stockage en entrepôt.

Le dispositif **5** de renfort est par ailleurs facilement adaptable aux sièges **2** et glissières **3** préexistants, les modifications à apporter étant mineures, ce qui offre au fabriquant une flexibilité quant à l'utilisation ou non du dispositif **5** de renfort sur les sièges **2.** Par exemple, pour une application dans l'automobile, la présence ou non du dispositif **5** de renfort peut être uniquement dictée par les impératifs de sécurité, liés aux résultats des crashs tests.

Enfin, le dispositif **5** de renfort est simple, peu couteux à réaliser et compatible avec une utilisation en grande série.

## Revendications

1. Véhicule **(1)** comprenant un dispositif **(5)** de renfort agencé entre une glissière **(3)** d'un siège **(2)** et un plancher **(4)** de véhicule **(1),** le dispositif **(5)** de renfort comprenant une entretoise **(11)** incluant une partie **(12)** proximale destinée à être fixée entre la glissière **(3)** et le plancher **(4),** et une partie **(13)** distale, en prolongement de la partie **(12)** proximale, la partie **(13)** distale s'étendant au-delà de la glissière **(3),** la partie **(13)** distale étant destinée à être fixée sur le plancher **(4),** la glissière **(3)** étant destinée à être fixée sur le plancher **(4)** du véhicule **(1),** une cale **(30)** de fixation faisant saillie de la glissière **(3),** la partie **(12)** proximale du dispositif **(5)** de renfort comprenant un trou **(32)** destiné à recevoir ladite cale **(30)** de fixation, le dispositif **(5)** de renfort étant **caractérisé en ce que** la partie **(12)** proximale est fixée au plancher **(4)** du véhicule **(1),** par l'intermédiaire de la pression exercée par la partie **(9)** fixe de la glissière **(3).**

2. Véhicule **(1)** comprenant un dispositif **(5)** de renfort selon la revendication 1, **caractérisé en ce que** la partie distale **(13)** est destinée à former une liaison encastrement avec le plancher **(4).**

3. Véhicule **(1)** comprenant un dispositif **(5)** de renfort selon la revendication 1 ou 2, **caractérisé en ce qu'il** comprend une ouverture **(26)** distale, disposée sur la partie **(13)** distale, et une vis **(19)** de fixation, l'ouverture **(26)** distale étant apte à permettre le passage de la vis **(19)** de fixation.

4. Véhicule **(1)** comprenant un dispositif **(5)** de renfort selon l'une quelconque des revendications précédentes, **caractérisé en ce qu'il** comprend un pion **(22)** de centrage, le pion **(22)** de centrage étant apte à être inséré dans un orifice **(25)** agencé dans le plancher **(4)** du véhicule **(1).**

5. Véhicule **(1)** comprenant un dispositif **(5)** de renfort selon l'une quelconque des revendications précédentes, **caractérisé en ce qu'il** comprend plusieurs parties **(13)** distales.

6. Véhicule **(1)** comprenant un dispositif **(5)** de renfort selon l'une quelconque des revendications précédentes, **caractérisé en ce qu'il** comprend une ouverture **(17)** proximale, disposée sur la partie **(12)** proximale, et une vis **(18)** d'assemblage, la vis **(18)** d'assemblage s'insérant au sein de l'ouverture **(17)** proximale.

7. Véhicule **(1)** comprenant un dispositif **(5)** de renfort selon la revendication 6, **caractérisé en ce qu'il** comprend un évidement **(27)** disposé autour de l'ouverture **(17)** proximale, l'évidement **(27)** formant une zone **(28)** déformable sur l'entretoise **(11).**

## Patentansprüche

1. Fahrzeug (1) mit einer Verstärkungseinrichtung (5), die zwischen einer Gleitschiene (3) eines Sitzes (2) und einem Boden (4) eines Fahrzeugs (1) angeordnet ist, wobei die Verstärkungseinrichtung (5) eine Strebe (11) mit einem proximalen Abschnitt (12), der zwischen der Gleitschiene (3) und dem Boden (4) befestigt werden soll, und einem distalen Abschnitt (13), der sich von dem proximalen Abschnitt (12) erstreckt, wobei sich der distale Abschnitt (13) über die Gleitschiene (3) hinaus erstreckt, wobei der Abschnitt (13) distal zur Befestigung am Boden (4), wobei die Gleitschiene (3) zur Befestigung am Boden (4) des Fahrzeugs (1) bestimmt ist, wobei ein Befestigungskeil (30) von der Gleitschiene (3) vorsteht, wobei der proximale Teil (12) der Verstärkungseinrichtung (5) ein Loch (32) zur Aufnahme des Befestigungskeils (30) aufweist, wobei die Verstärkungseinrichtung (5) **dadurch gekennzeichnet ist, dass** der proximale Teil (12) über den Druck, der durch den Teil (9) ausgeübt wird, am Boden (4) des Fahrzeugs (1) befestigt ist Schienenbefestigung (3).

2. Fahrzeug (1) mit einer Verstärkungsvorrichtung (5) nach Anspruch 1, **dadurch gekennzeichnet, dass** der distale Teil (13) dazu bestimmt ist, eine Einbauverbindung mit dem Boden (4) zu bilden.

3. Fahrzeug (1) mit einer Verstärkungsvorrichtung (5) nach Anspruch 1 oder 2, **dadurch gekennzeichnet, dass** es eine distale Öffnung (26), die auf dem distalen Teil (13) angeordnet ist, und eine Befestigungsschraube (19) umfasst, wobei die distale Öffnung (26) geeignet ist, den Durchgang der Befestigungsschraube (19) zu ermöglichen.

4. Fahrzeug (1) mit einer Verstärkungsvorrichtung (5) nach einem der vorhergehenden Ansprüche, **dadurch gekennzeichnet, dass** es einen Zentrierstift (22) umfasst, wobei der Zentrierstift (22) in eine Öffnung (25) einsetzbar ist, die im Boden (4) des Fahrzeugs (1) angeordnet ist.

5. Fahrzeug (1) mit einer Verstärkungsvorrichtung (5) nach einem der vorhergehenden Ansprüche, **dadurch gekennzeichnet, dass** es mehrere distale Teile (13) umfasst.

6. Fahrzeug (1) mit einer Verstärkungsvorrichtung (5) nach einem der vorhergehenden Ansprüche, **dadurch gekennzeichnet, dass** es eine proximale Öffnung (17), die auf dem proximalen Teil (12) angeordnet ist, und eine Verbindungsschraube (18) umfasst, wobei die Verbindungsschraube (18) in die proximale Öffnung (17) eingreift.

7. Fahrzeug (1) mit einer Verstärkungsvorrichtung (5) nach Anspruch 6, **dadurch gekennzeichnet, dass** es eine Aussparung (27) umfasst, die um die proximale Öffnung (17) angeordnet ist, wobei die Aussparung (27) einen verformbaren Bereich (28) auf der Strebe (11) bildet.

## Claims

1. A vehicle (1) comprising a reinforcement device (5) arranged between a slide (3) of a seat (2) and a floor (4) of a vehicle (1), the reinforcement device (5) comprising a spacer (11) including a proximal portion (12) to be fixed between the slide (3) and the floor (4), and a distal portion (13), in extension of the proximal portion (12), the distal portion (13) extending beyond the slide (3), the distal portion (13) the blade being intended to be fixed to the floor (4), the slide (3) being intended to be fixed to the floor (4) of the vehicle (1), a fixing wedge (30) projecting from the slide (3), the proximal part (12) of the reinforcement device (5) comprising a hole (32) intended to receive said fixing wedge (30), the reinforcement device (5) being **characterized in that** the proximal part (12) is fixed to the floor (4) of the vehicle (1), by means of the pressure exerted by the fixed part (9) the slide (3).

2. Vehicle (1) comprising a reinforcement device (5) according to claim 1, **characterized in that** the distal part (13) is intended to form an embedding connection with the floor (4).

3. Vehicle (1) comprising a reinforcement device (5) according to claim 1 or 2, **characterized in that** it comprises a distal opening (26), arranged on the distal part (13), and a fixing screw (19), the distal opening (26) being capable of allowing the fixing screw (19) to pass.

4. Vehicle (1) comprising a reinforcement device (5) according to any one of the preceding claims, **characterized in that** it comprises a centering pin (22), the centering pin (22) being able to be inserted into an orifice (25) arranged in the floor (4) of the vehicle (1).

5. Vehicle (1) comprising a reinforcement device (5) according to any one of the preceding claims, **characterized in that** it comprises a plurality of distal parts (13).

6. A vehicle (1) comprising a reinforcement device (5) according to any one of the preceding claims, **characterized in that** it comprises a proximal opening (17), disposed on the proximal portion (12), and an assembly screw (18), the assembly screw (18) being inserted into the proximal opening (17).

7. Vehicle (1) comprising a reinforcement device (5) according to claim 6, **characterized in that** it comprises a recess (27) arranged around the proximal opening (17), the recess (27) forming a deformable zone (28) on the spacer (11).
